# EUROPEAN PATENT APPLICATION

(11) **EP 4 559 877 A1**
(43) Date of publication of application: **28.05.2025**
(21) Application number: 23842625.8
(22) Date of filing: 28.03.2023
(51) Int. Cl.: C03B 33/07, C03C 27/06, E06B 3/663, E06B 3/677

(54) **METHOD FOR MANUFACTURING GLASS PANEL UNIT, AND GLASS PANEL UNIT ASSEMBLY**

(30) Priority: 22.07.2022 JP 2022117554
(71) Applicant: Panasonic Intellectual Property Management Co., Ltd., Osaka-shi, Osaka 540-6207 (JP)
(72) Inventor: NONAKA, Masataka, Kadoma-shi, Osaka 571-0057 (JP); ABE, Hiroyuki, Kadoma-shi, Osaka 571-0057 (JP); ISHIBASHI, Tasuku, Kadoma-shi, Osaka 571-0057 (JP); URIU, Eiichi, Kadoma-shi, Osaka 571-0057 (JP); SHIMIZU, Takeshi, Kadoma-shi, Osaka 571-0057 (JP); HASEGAWA, Kazuya, Kadoma-shi, Osaka 571-0057 (JP); ISHIKAWA, Haruhiko, Kadoma-shi, Osaka 571-0057 (JP); OTAKE, Shohei, Kadoma-shi, Osaka 571-0057 (JP); KOSUGI, Naoki, Kadoma-shi, Osaka 571-0057 (JP)
(74) Representative: Müller-Boré & Partner Patentanwälte PartG mbB
(86) International application number: PCT/JP2023/012661
(87) International publication number: WO 2024/018689

(57) **Abstract**

Provided is a method for manufacturing a glass panel unit which makes it easier to cut off first and second glass substrates along a line aligned with a seal member. This method includes an arrangement step S1, a bonding step S2, and a cutting step S4. The arrangement step S1 includes arranging a first glass substrate 1 and a second glass substrate 2 to make the first and second glass substrates 1, 2 face each other with a seal member 3 interposed between themselves. The bonding step S2 includes bonding the first and second glass substrates 1, 2 via the seal member 3. The cutting step S4 includes cutting off the first and second glass substrates 1, 2 along the same line when viewed in a facing direction X in which the first and second glass substrates 1, 2 bonded together face each other and along the seal member 3. The cutting step S4 is the step of forming multiple sets of the first and second glass substrates 1, 2 divided by cutting off the first and second glass substrates 1, 2 along a plane where the seal member 3 remains on respective sides of cross sections of the first and second glass substrates 1, 2 divided. A first cutting step includes cutting off the first glass substrate 1 from a surface thereof. A second cutting step includes cutting off the second glass substrate 2 from a surface thereof.

## Description

### Technical Field

The present disclosure generally relates to a method for manufacturing a glass panel unit and also relates to a glass panel unit assembly. More particularly, the present disclosure relates to a method for manufacturing a glass panel unit in which a first glass substrate and a second glass substrate are arranged to face each other with a seal member interposed between themselves, and a glass panel unit assembly for use in the manufacturing method.

### Background Art

Patent Literature 1 discloses a method for manufacturing a glass panel unit. The manufacturing method includes bonding, via a seal member, a first glass substrate and a second glass substrate which are arranged to face each other with the seal member interposed between themselves. Next, the first glass substrate, the seal member, and the second glass substrate are cut off at a time along a cutting plane, passing through the seal member, from one side selected from the first and second glass substrates bonded together, thereby manufacturing a glass panel unit.

According to Patent Literature 1, the first and second glass substrates are preferably cut off along a line aligned with the seal member with no damage caused to the first glass substrate or the second glass substrate.

### Citation List

### Patent Literature

Patent Literature 1: WO 2016/143328 A1

### Summary of Invention

An object of the present disclosure is to provide a method for manufacturing a glass panel unit which makes it easier to cut off first and second glass substrates along a plane aligned with a seal member and also provide a glass panel unit assembly for use in such a manufacturing method.

A method for manufacturing a glass panel unit according to an aspect of the present disclosure includes an arrangement step, a bonding step, and a cutting step. The arrangement step includes arranging a first glass substrate and a second glass substrate to make the first glass substrate and the second glass substrate face each other with a seal member interposed between the first glass substrate and the second glass substrate. The bonding step includes bonding the first glass substrate and the second glass substrate via the seal member. The cutting step includes cutting off the first glass substrate and the second glass substrate along an identical line as viewed in a direction in which the first glass substrate and the second glass substrate bonded together face each other and along the seal member. The cutting step is the step of forming multiple sets of the first and second glass substrates divided by cutting off the first and second glass substrates along a plane where the seal member remains along respective sides of cross sections of the first and second glass substrates. The cutting step includes a first cutting step and a second cutting step. The first cutting step includes cutting off the first glass substrate from a surface of the first glass substrate. The second cutting step includes cutting off the second glass substrate from a surface of the second glass substrate.

A glass panel unit assembly according to another aspect of the present disclosure includes a first glass substrate and a second glass substrate, a frame member, a plurality of partition members, and an evacuation port. The first glass substrate and the second glass substrate face each other. The frame member is formed in a frame shape between the first glass substrate and the second glass substrate. The plurality of partition members are arranged to partition an internal space, surrounded with the first glass substrate, the second glass substrate, and the frame member, into a first space and a second space. The evacuation port is provided to allow the second space to communicate with an external space. The plurality of partition members face each other with a gap left between the plurality of partition members.

### Brief Description of Drawings

FIG. 1 is a perspective view illustrating an arrangement step of a method for manufacturing a glass panel unit according to a first embodiment;
FIG. 2 is a plan view illustrating the arrangement step and a bonding step of the method for manufacturing a glass panel unit according to the first embodiment;
FIG. 3 is a cross-sectional view taken along the plane A-A shown in FIG. 2;
FIG. 4 is a partially cutaway plan view illustrating a processing step and a cutting step of the method for manufacturing a glass panel unit according to the first embodiment;
FIG. 5 is a plan view of a glass panel unit manufactured by the method for manufacturing a glass panel unit according to the first embodiment;
FIG. 6 is a cross-sectional view taken along the plane B-B shown in FIG. 5;
FIG. 7 is a flowchart showing a procedure of the method for manufacturing a glass panel unit according to the first embodiment;
FIG. 8 is a cross-sectional view illustrating the cutting step of the method for manufacturing a glass panel unit according to the first embodiment;
FIG. 9 is a cross-sectional view illustrating the cutting step of the method for manufacturing a glass panel unit according to the first embodiment;
FIG. 10 is a cross-sectional view illustrating the cutting step of the method for manufacturing a glass panel unit according to the first embodiment;
FIG. 11 is a cross-sectional view illustrating the cutting step of the method for manufacturing a glass panel unit according to the first embodiment;
FIG. 12 is a plan view illustrating an arrangement step and a bonding step of a method for manufacturing a glass panel unit according to a second embodiment;
FIG. 13 is a cross-sectional view taken along the plane C-C shown in FIG. 12;
FIG. 14 is a plan view illustrating a cutting step of the method for manufacturing a glass panel unit according to the second embodiment;
FIG. 15 is a cross-sectional view illustrating the cutting step of the method for manufacturing a glass panel unit according to the second embodiment;
FIG. 16 is a cross-sectional view illustrating the cutting step of the method for manufacturing a glass panel unit according to the second embodiment;
FIG. 17 is a cross-sectional view illustrating the cutting step of the method for manufacturing a glass panel unit according to the second embodiment;
FIG. 18 is a cross-sectional view illustrating the cutting step of the method for manufacturing a glass panel unit according to the second embodiment;
FIG. 19A is a schematic representation illustrating an exemplary region defining member for use in the method for manufacturing a glass panel unit according to the second embodiment;
FIG. 19B is a schematic representation illustrating another exemplary region defining member for use in the method for manufacturing a glass panel unit according to the second embodiment;
FIG. 19C is a schematic representation illustrating still another exemplary region defining member for use in the method for manufacturing a glass panel unit according to the second embodiment;
FIG. 19D is a schematic representation illustrating yet another exemplary region defining member for use in the method for manufacturing a glass panel unit according to the second embodiment;
FIG. 20A is a cross-sectional view illustrating a comparative example;
FIG. 20B is a cross-sectional view illustrating a first example;
FIG. 20C is a cross-sectional view illustrating a second example;
FIG. 21A is a cross-sectional view illustrating a cutting step of known art;
FIG. 21B is a cross-sectional view illustrating the cutting step of the known art; and
FIG. 21C is a cross-sectional view illustrating a problem with the known art.

### Description of Embodiments

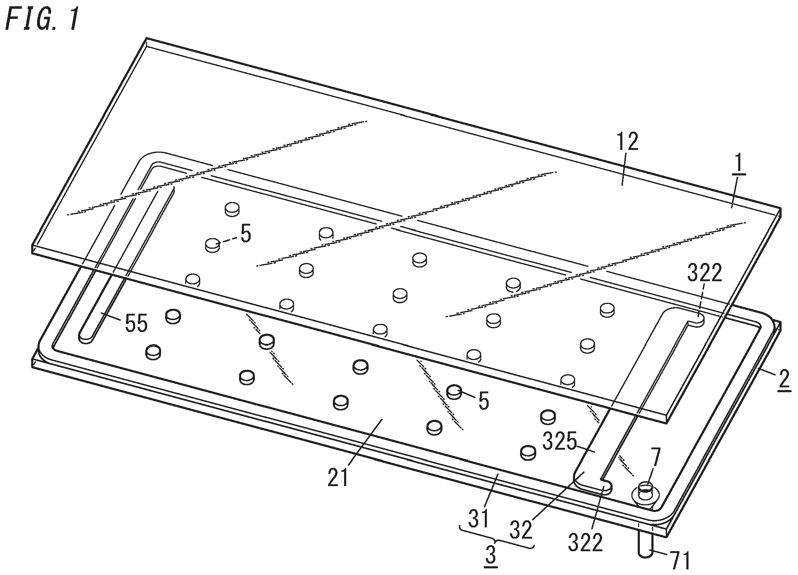

Exemplary embodiments and their variations will now be described with reference to FIGS. 1-21. Note that the embodiments and their variations to be described below are only exemplary ones of various embodiments of the present disclosure and their variations and should not be construed as limiting. Rather, the exemplary embodiments and their variations may be readily modified in various manners depending on a design choice or any other factor without departing from the scope of the present disclosure. Optionally, the variations to be described below may be adopted in combination as appropriate.

The drawings to be referred to in the following description of embodiments are all schematic representations. Thus, the ratio of the dimensions of respective constituent elements illustrated on the drawings does not always reflect their actual dimensional ratio.

### (First embodiment)

### (1) Overview

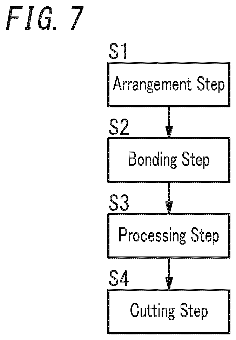

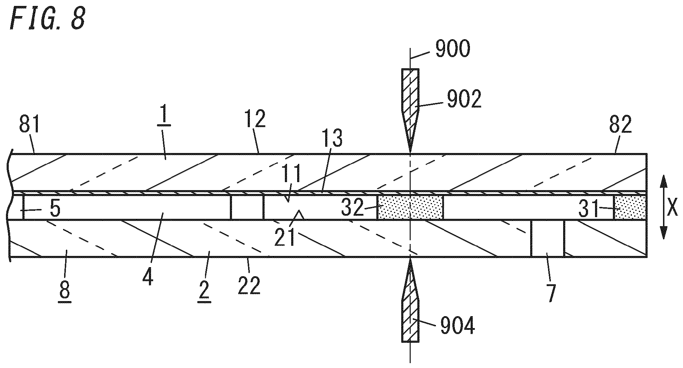

A method for manufacturing a glass panel unit 100 according to an exemplary embodiment includes an arrangement step S1, a bonding step S2, and a cutting step S4 (refer to FIG. 7). The arrangement step S1 includes arranging a first glass substrate 1 and a second glass substrate 2 to make the first glass substrate 1 and the second glass substrate 2 face each other with a seal member 3 interposed between the first glass substrate 1 and the second glass substrate 2 (refer to FIGS. 1-3). The bonding step S2 includes bonding the first glass substrate 1 and the second glass substrate 2 via the seal member 3. The cutting step S4 includes cutting off the first glass substrate 1 and the second glass substrate 2 along the same line when viewed in a facing direction X in which the first glass substrate 1 and the second glass substrate 2 bonded together face each other and along a plane where the seal member 3 may remain along respective sides of cross sections of the first and second glass substrates 1, 2 divided (refer to FIGS. 8-12). The cutting step S4 includes a first cutting step and a second cutting step. The first cutting step includes cutting off the first glass substrate 1 from a surface of the first glass substrate 1. The second cutting step includes cutting off the second glass substrate 2 from a surface of the second glass substrate 2.

According to this embodiment, both the first glass substrate 1 and the second glass substrate 2 are cut off from their surface in both the first cutting step and the second cutting step. This makes it easier, even if either the first glass substrate 1 or the second glass substrate 2 is relatively thick, to cut off the first glass substrate 1 and the second glass substrate 2 along a line aligned with the seal member 3.

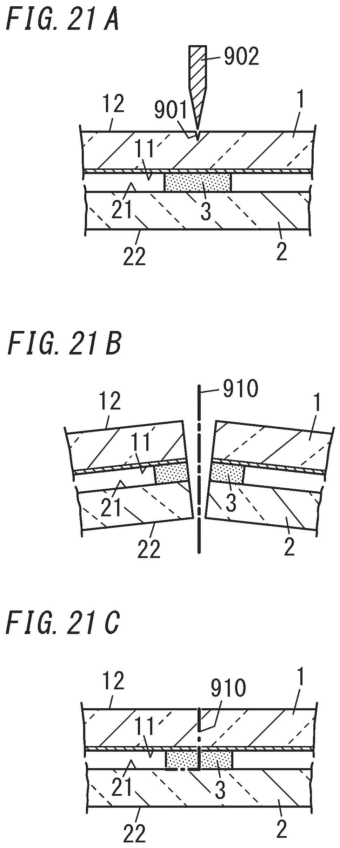

FIGS. 21A and 21B illustrate a cutting step of the known art. This cutting step includes cutting off, after the first glass substrate 1 and the second glass substrate 2 have been bonded together in a bonding step with the seal member 3 interposed between themselves, the first glass substrate 1, the second glass substrate 2, and the seal member 3.

The cutting step of the known art includes, first, forming an incision 901 on a second surface 12 of the first glass substrate 1 as shown in FIG. 21A. The second surface 12 is a surface opposite from a first surface 11 thereof facing toward the second glass substrate 2. The second surface 12 forms the principal surface of the first glass substrate 1. The incision 901 is a crack which reaches a shallow depth inside the first glass substrate 1 from the second surface 12 thereof. In addition, the incision 901 is formed along a line aligned with the seal member 3. That is to say, the incision 901 is formed to overlap with the seal member 3 when the first glass substrate 1 is viewed in plan from over the second surface 12 thereof. The incision 901 is formed with a cutter 902. The cutter 902 may be, for example, a cutting wheel provided for a scriber. The incision 901 is formed by pressing the cutting edge of the cutter 902 against the second surface 12.

Next, the second glass substrate 2 is pressed toward the first glass substrate 1 from a second surface 22 thereof. The second surface 22 of the second glass substrate 2 is a surface opposite from a first surface 21 thereof facing toward the first glass substrate 1. The second surface 22 forms the principal surface of the second glass substrate 2. The line along which the second glass substrate 2 is pressed corresponds to the incision 901. That is to say, when viewed in plan from under the second surface 22 thereof, the second glass substrate 2 is pressed along a line overlapping with the seal member 3 and the incision 901.

Then, pressing the second glass substrate 2 from under the second surface 22 toward the first glass substrate 1 causes the incision 901 to run from the second surface 12 of the first glass substrate 1 to the first surface 11 of the first glass substrate 1, the seal member 3, the first surface 21 of the second glass substrate 2, and then the second surface 22 of the second glass substrate 2, thus cutting off the first glass substrate 1, the second glass substrate 2, and the seal member 3 in the thickness direction. The cutting line 910 shown in FIG. 21B indicates the direction in which the incision 901 runs.

In this case, if the first glass substrate 1 and the second glass substrate 2 are both relatively thin, then the first glass substrate 1, the second glass substrate 2, and the seal member 3 may be cut off smoothly parallel to the thickness direction as indicated by the cutting line 910 shown in FIG. 21B. Nevertheless, if at least one of the first glass substrate 1 or the second glass substrate 2 is relatively thick, then the first glass substrate 1, the second glass substrate 2, and the seal member 3 may fail to be cut off smoothly parallel to the thickness direction. For example, even though the first glass substrate 1 and the seal member 3 are cut off in the thickness direction, the second glass substrate 2 may fail to be cut off in the thickness direction as shown in FIG. 21C. In that case, the cutting line 910 may be formed in the thickness direction through the first glass substrate 1 and the seal member 3 but may extend along the boundary between the seal member 3 and the first surface 21 of the second glass substrate 2, thus causing a cutting error in some cases.

In contrast, according to this embodiment, both the first glass substrate 1 and the second glass substrate 2 are cut off from their surface in both the first cutting step and the second cutting step. This makes it easier, even if either the first glass substrate 1 or the second glass substrate 2 is relatively thick, to cut off the first glass substrate 1 and the second glass substrate 2 along a line aligned with the seal member 3.

### (2) Details

A method for manufacturing a glass panel unit 100 according to this embodiment includes an arrangement step S1, a bonding step S2, and a cutting step S4. Optionally, the method for manufacturing the glass panel unit 100 may include not only the arrangement step S1, the bonding step S2, and the cutting step S4 but also a processing step S3 as well. As shown in FIG. 7, in the method for manufacturing the glass panel unit 100 according to this embodiment, the arrangement step S1 is followed by the bonding step S2, the bonding step S2 is followed by the processing step S3, and the processing step S3 is followed by the cutting step S4. Next, the respective process steps will be described in detail one by one.

### <Arrangement step>

The arrangement step S1 includes arranging the first glass substrate 1 and the second glass substrate 2 to make the first glass substrate 1 and the second glass substrate 2 face each other with the seal member 3 interposed between themselves.

The arrangement step S1 includes arranging the first glass substrate 1, the second glass substrate 2, the seal member 3, a plurality of spacers 5, and a gas adsorbent 55 shown in FIGS 1-3 at respective predetermined positions.

The first glass substrate 1 is a rectangular flat glass pane. The first glass substrate 1 has the first surface 11 on one side in the thickness direction and the second surface 12 on the other side in the thickness direction. The first surface 11 and second surface 12 of the first glass substrate 1 are flat surfaces which are parallel to each other.

Examples of materials for the first glass substrate 1 include soda lime glass, high strain point glass, chemically tempered glass, alkali-free glass, quartz glass, Neoceram, and thermally tempered glass.

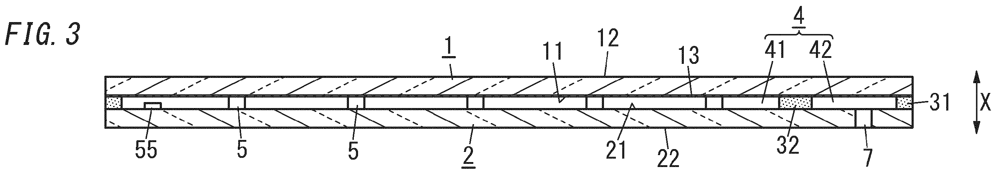

The first surface 11 of the first glass substrate 1 may be an outer surface of a coating 13 (refer to FIG. 3). The coating 13 may be, for example, an infrared reflective film but may also be a film with other physical properties. Optionally, no coating 13 may be provided for the first glass substrate 1.

The second glass substrate 2, as well as the first glass substrate 1, is a rectangular flat glass pane. The second glass substrate 2 has the first surface 21 on one side in the thickness direction and the second surface 22 on the other side in the thickness direction. The first surface 21 and second surface 22 of the second glass substrate 2 are flat surfaces which are parallel to each other. An evacuation port 7 is provided at a corner of the second glass substrate 2.

Examples of materials for the second glass substrate 2 include soda lime glass, high strain point glass, chemically tempered glass, alkali-free glass, quartz glass, Neoceram, and thermally tempered glass.

The first glass substrate 1 and the second glass substrate 2 are arranged to face each other. In this case, the first surface 11 of the first glass substrate 1 and the first surface 21 of the second glass substrate 2 face each other and are parallel to each other (refer to FIG. 3).

The seal member 3 is interposed between the first glass substrate 1 and the second glass substrate 2. The seal member 3 includes a frame member 31 formed in a frame shape. In addition, the seal member 3 further includes a partition member 32. The frame member 31 and the partition member 32 are arranged on the first surface 21 of the second glass substrate 2. On the first surface 21, the rectangular frame member 31 is disposed along the outer peripheral edges of the second glass substrate 2. The partition member 32 is arranged to be surrounded with the frame member 31.

The first glass substrate 1 and the second glass substrate 2 are hermetically bonded together via the seal member 3 (including the frame member 31 and the partition member 32) in the bonding step S2 (to be described later). As a result, an internal space 4 is created between the first glass substrate 1 and the second glass substrate 2. The internal space 4 is a space surrounded with the frame member 31, the first glass substrate 1, and the second glass substrate 2.

Both the frame member 31 and the partition member 32 of the seal member 3 are made of a glass frit (glass paste). The glass frit may be a low-melting glass frit such as a bismuth-based glass frit, a lead-based glass frit, and a vanadium-based glass frit. The seal member 3 is a glass frit having a softening point higher than 265°C and preferably has a softening point equal to or higher than 300°C and more preferably has a softening point equal to or higher than 350°C. When formed as the seal member 3, a glass frit with such a high softening point is likely to have similar properties (such as hardness) to the first glass substrate 1 and the second glass substrate 2. This makes it easier to cut off the seal member 3 in the cutting step S4 and reduces the chances of causing a cutting error. In this embodiment, a bismuth-based glass frit with a softening point of 430°C is preferably used.

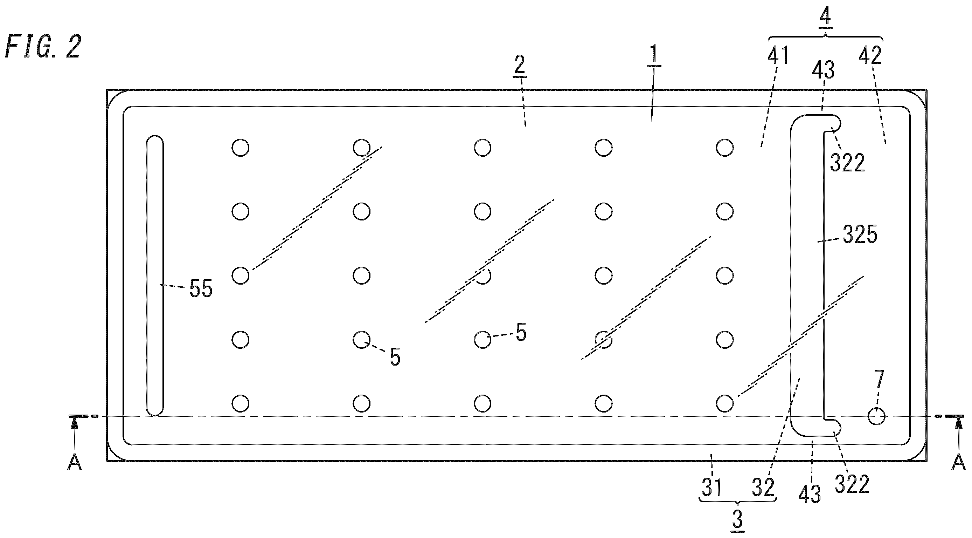

As shown in FIG. 2, the partition member 32 includes a wall portion 325 extending straight and a pair of blocking portions 322 extended from both longitudinal ends of the wall portion 325. The pair of blocking portions 322 extends perpendicularly to the longitudinal axis of the wall portion 325.

Air passages 43 are formed between the partition member 32 and the frame member 31. Specifically, the space left between one longitudinal end of the wall portion 325 and the frame member 31 and the space left between the other longitudinal end of the wall portion 325 and the frame member 31 each serve as the air passage 43. Note that the locations and number of the air passages 43 are only an example and should not be construed as limiting.

The plurality of spacers 5 are arranged on the first surface 21 of the second glass substrate 2. The plurality of spacers 5 are used to maintain a predetermined gap between the first glass substrate 1 and the second glass substrate 2. Each of the plurality of spacers 5 is formed out of a transparent material in a circular columnar shape. The material, dimensions, and shape of each spacer 5, the interval between adjacent spacers 5, and the arrangement pattern of the plurality of spacers 5 may be selected appropriately. Optionally, only one spacer 5 may be disposed or no spacers 5 may be provided at all. Furthermore, the spacers 5 do not have to be made of a transparent material.

The gas adsorbent 55 is disposed on the first surface 21 of the second glass substrate 2. On the first surface 21, the gas adsorbent 55 is located distant from the partition member 32 and the air passages 43. The gas adsorbent 55 is used to adsorb the gas emitted from the frame member 31 and the partition member 32 when the assembly is heated. Optionally, the gas adsorbent 55 may be included in the plurality of spacers 5. Alternatively, no gas adsorbent 55 may be provided.

### <Bonding step>

The bonding step S2 includes bonding the first glass substrate 1 and the second glass substrate 2 together via the seal member 3. That is to say, the bonding step S2 is the step of bonding the first and second glass substrates 1, 2, which have been arranged in the arrangement step S1, together via the seal member 3. In addition, the bonding step S2 further includes creating, between the first and second glass substrates 1, 2 bonded via the frame member 31, an internal space 4 surrounded with the frame member 31. Thus, the internal space 4 is partitioned by a part of the seal member 3 (i.e., the partition member 32) into a first space 41 and a second space 42 (refer to FIGS. 2 and 3). The first space 41 and the second space 42 communicate with each other through the air passages 43.

The bonding step S2 includes heating, in a sealing furnace, the first and second glass substrates 1, 2 which have been set in place to sandwich the seal member 3 and other members between themselves as shown in FIGS. 2 and 3. In the bonding step S2, the temperature inside the sealing furnace is determined at a predetermined temperature (hereinafter referred to as a "first melting temperature") equal to or higher than the softening point of the frame member 31. Melting the frame member 31 once inside the furnace at the first melting temperature causes the first and second glass substrates 1, 2 to be hermetically bonded together via the frame member 31.

Specifically, the first and second glass substrates 1, 2 loaded into the sealing furnace are heated at the first melting temperature for a predetermined amount of time. In this process step, the first melting temperature and the predetermined amount of time are determined to prevent the air passages 43 from being closed by the partition member 32. At a point in time when the bonding step S2 is finished, air is still allowed to pass between the first space 41 and the second space 42 through the air passages 43 left between the frame member 31 and the partition member 32.

The first space 41 is a space where the plurality of spacers 5 and the gas adsorbent 55 are located. The second space 42 is a space continuous with the evacuation port 7. The evacuation port 7 connects the second space 42 to the external space. That is to say, the evacuation port 7 allows the second space 42 to communicate with the external space. The evacuation port 7 according to this embodiment is used to evacuate the first space 41 through the second space 42 and the air passages 43.

### <Processing step>

The processing step S3 is the step of turning the internal space 4 into a vacuum space and includes an evacuation step and a hermetically sealing step. The evacuation step and the hermetically sealing step of the processing step S3 are performed in the sealing furnace continuously with the bonding step S2.

The evacuation step is the step of exhausting the air from inside the internal space 4 to the external space through the evacuation port 7, thereby creating a vacuum in the entire internal space 4. The evacuation step according to this embodiment includes exhausting the air from inside the first space 41 to the external space via the air passages 43, the second space 42, and the evacuation port 7, thereby reducing the pressure in the first space 41 until a vacuum space is created there. This evacuation is carried out using, for example, a vacuum pump via an exhaust pipe 71 (refer to FIG. 1) connected to the second glass substrate 2 to communicate with the evacuation port 7. The duration of the evacuation is determined to create a vacuum space with a desired degree of vacuum (e.g., a degree of vacuum equal to or less than 0.1 Pa, for example).

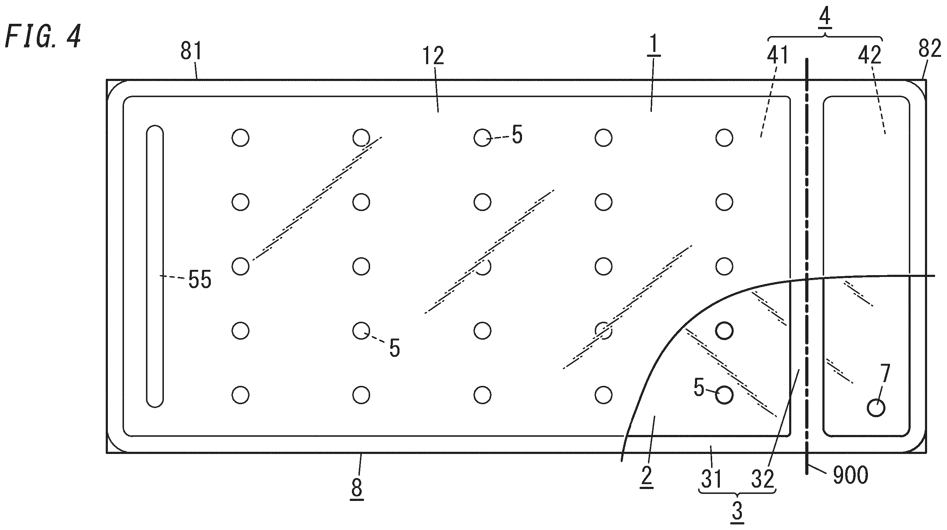

The hermetically sealing step includes melting the partition member 32 at a predetermined temperature (hereinafter referred to as a "second melting temperature") equal to or higher than the softening point of the partition member 32, thereby deforming the partition member 32 to close the air passages 43. As a result, the first space 41 that has been evacuated is surrounded entirely with the frame member 31 and the partition member 32 to be hermetically sealed to prevent the air from entering the first space 41 from the external space (refer to FIG. 4). Specifically, the partition member 32 is deformed to cause the blocking portion 322 at one end of the partition member 32 to close one air passage 43 and to cause the blocking portion 322 at the other end of the partition member 32 to close the other air passage 43 (refer to FIGS. 2 and 4). The partition member 32 thus deformed serves as a boundary wall that hermetically partitions the internal space 4 as the vacuum space into the first space 41 and the second space 42.

The second melting temperature at which the partition member 32 is melted is determined at a temperature higher than the first melting temperature. In other words, the partition member 32 is provided to be deformed at a temperature higher than the first melting temperature and thereby close the air passages 43. This temperature setting prevents the partition member 32 from being deformed to close the air passages 43 when the first and second glass substrates 1, 2 are bonded together in the bonding step S2.

An assembly 8 having the first space 41 that has turned into a vacuum space as shown in FIG. 4 is obtained by going through this processing step S3. The assembly 8 is a provisionally assembled unit and is an intermediate product for use in the method for manufacturing a glass panel unit 100 according to this embodiment.

In this embodiment, the processing step S3 is the step of exhausting the air from the internal space 4 (consisting of the first space 41 and the second space 42) through the evacuation port 7 provided through the second glass substrate 2 and then hermetically sealing the first space 41 by deforming a part (i.e., the partition member 32) of the seal member 3 (refer to FIG. 4). Note that the manufacturing method according to this embodiment may further include a processing step S3 including either exhausting the air from the internal space 4 or supplying a gas into the internal space 4.

### <Cutting step>

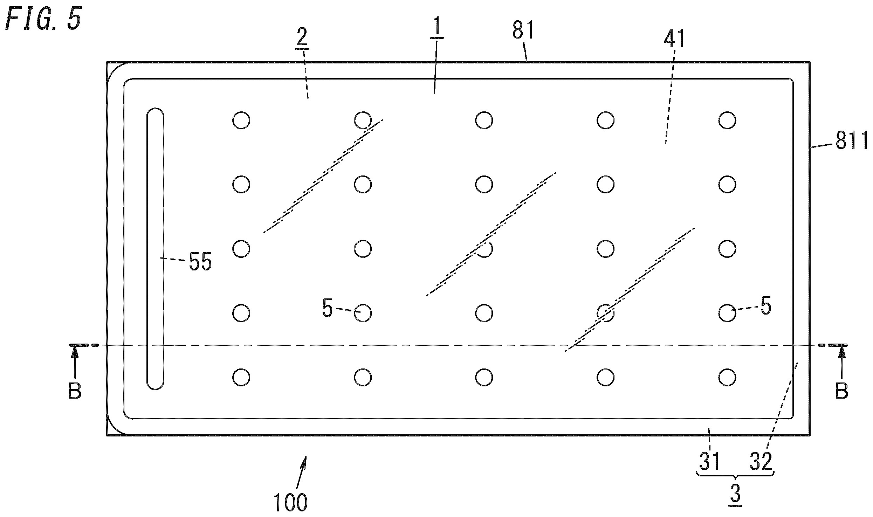

The cutting step S4 includes cutting off the first and second glass substrates 1, 2 along a virtual cutting plane 900 that passes through the first glass substrate 1, the second glass substrate 2, and the seal member 3. That is to say, the cutting step S4 includes cutting off the assembly 8, unloaded from the sealing furnace, along the virtual cutting plane 900 shown in FIGS. 4 and 5, thereby physically separating the assembly 8 into a part 81 having the first space 41 and another part 82 having the second space 42. The cutting plane 900 is provided to pass through the partition member 32 along the entire length thereof when viewed in plan. That is to say, the assembly 8 is cut off along the entire latitudinal axis thereof. As used herein, the phrase "when viewed in plan" means viewing either the second surface 12 of the first glass substrate 1 or the second surface 22 of the second glass substrate 2 from in front of the second surface 12 or the second surface 22 in the facing direction X in which the first and second glass substrates 1, 2 bonded together face each other. The facing direction X is the same as a thickness direction defined for the first and second glass substrates 1, 2 and the seal member 3 that have been bonded together.

To cut off the assembly 8 along the cutting plane 900, a cutter 902 is used. The cutter 902 may be, for example, a cutting wheel provided for a scriber. Optionally, a mechanism for applying vibrations to the cutter 902 may be used. The direction in which the vibrations are applied is the thickness direction defined for the first glass substrate 1 and the second glass substrate 2, in other words, the direction in which the first glass substrate 1, the partition member 32, and the second glass substrate 2 are stacked one on top of another (i.e., the same as the facing direction X). Alternatively, the scriber may also be replaced with another type of device such as a device for cutting off the assembly 8 with water jet emitted or a device for cutting off the assembly 8 by irradiating the assembly 8 with a laser beam, for example.

In this embodiment, the cutting step S4 includes cutting off the first glass substrate 1 and the second glass substrate 2 along the same line when viewed in plan in the facing direction X in which the first glass substrate 1 and the second glass substrate 2 bonded together face each other and along the seal member 3. That is to say, the cutting step S4 includes cutting off the first glass substrate 1 and the second glass substrate 2 along a line on which the first and second glass substrates 1, 2 are aligned with each other (i.e., along the same (or identical) line) when viewed in plan. Such a line on which the first and second glass substrates 1, 2 are aligned with each other when viewed in plan is located on the virtual cutting plane 900. Note that the cutting step S4 includes cutting off the seal member 3 as well. The seal member 3 is cut off along a plane where part of the seal member 3 that has been cut off may remain along one side 811 of the respective cross sections of the first and second glass substrates 1, 2 that have been cut off. Consequently, part of the seal member 3 that has been cut off remains along the side 811 included in the part 81 having the first space 41, thus keeping the first space 41 hermetically sealed. In addition, another part of the seal member 3 that has been cut off remains along another side included in the part 82 having the second space 42.

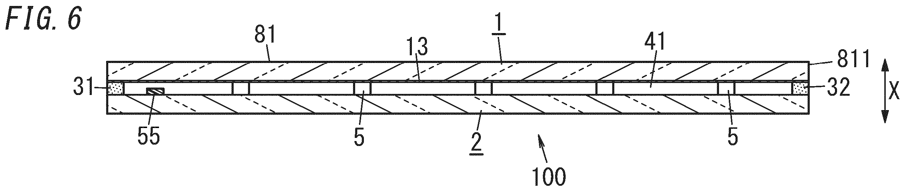

As can be seen, the cutting step S4 is the step of forming multiple sets of the first and second glass substrates 1, 2 divided by cutting off the first and second glass substrates 1, 2 along a plane where the seal member 3 may remain along respective sides of cross sections of the first and second glass substrates 1, 2 divided. In this embodiment, two sets of first and second glass substrates 1, 2 divided are formed. One of the two sets of first and second glass substrates 1, 2 divided is the first and second glass substrates 1, 2 divided to serve as the part 81 having the first space 41 as shown in FIG. 6. The other set of first and second glass substrates 1, 2 divided is the first and second glass substrates 1, 2 divided to serve as the part 82 having the second space 42 (not shown). As can be seen, the cutting step S4 is the step of cutting off the first and second glass substrates 1, 2 along a plane where part of the seal member 3 may remain along respective sides of cross sections of the first and second glass substrates 1, 2 divided.

In this embodiment, the cutting step S4 includes a first cutting step and a second cutting step. That is to say, the step of cutting off the first glass substrate 1, the second glass substrate 2, and the seal member 3 may be performed in these two steps, namely, the first cutting step and the second cutting step.

The first cutting step includes cutting off the first glass substrate 1 from one surface of the first glass substrate 1. As used herein, the "surface of the first glass substrate 1" in the first cutting step refers to the second surface 12 of the first glass substrate 1. Thus, the first cutting step is the step of cutting off the first glass substrate 1 from the second surface 12 toward the first surface 11 thereof.

The second cutting step includes cutting off the second glass substrate 2 from one surface of the second glass substrate 2. As used herein, the "surface of the second glass substrate 2" in the second cutting step refers to the second surface 22 of the second glass substrate 2. Thus, the second cutting step is the step of cutting off the second glass substrate 2 from the second surface 22 toward the first surface 21 thereof.

The first cutting step includes a first incision forming step and a first pressing step. That is to say, the first glass substrate 1 is cut off from the surface thereof in these two steps, namely, the first incision forming step and the first pressing step.

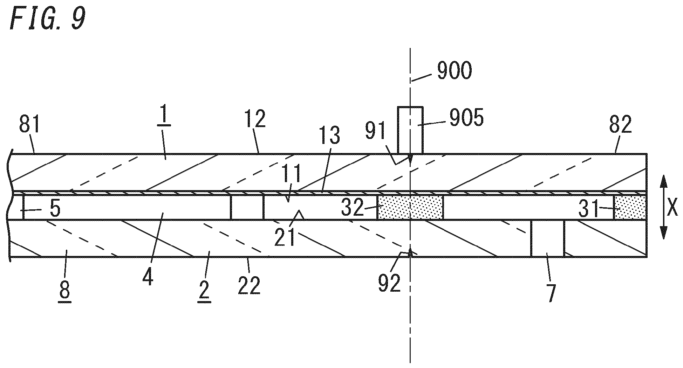

The first incision forming step includes forming a first incision 91 on the first glass substrate 1 from the surface of the first glass substrate 1. As shown in FIG. 8, the first incision 91 is formed by pressing the cutting edge of the cutter 902 against the surface (i.e., the second surface 12) of the first glass substrate 1. The first incision 91 is formed to such a depth as to scratch the surface (i.e., the second surface 12) of the first glass substrate 1 (refer to FIG. 9). Also, the first incision forming step is carried out along the entire length of the latitudinal axis of the assembly 8. Thus, the first incision 91 is formed linearly in plan view in the direction in which the seal member 3 extends (i.e., along the longitudinal axis of the seal member 3).

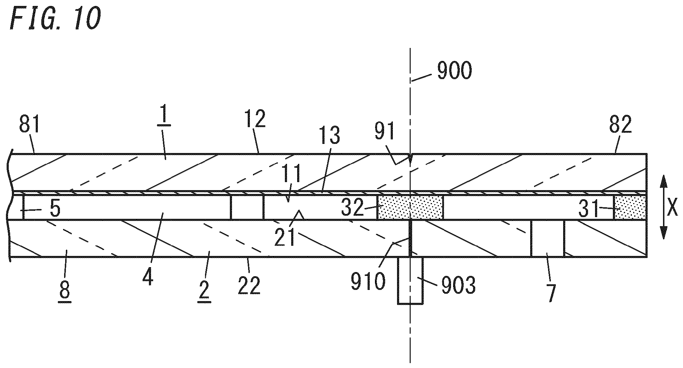

The first pressing step includes applying pressing force along the first incision 91 from the second glass substrate 2 toward the first glass substrate 1 to cut off the first glass substrate 1. Thus, the first pressing step is a step to be performed after the first incision forming step. The first pressing step may be performed by pressing a presser 903 such as a roller against the surface (i.e., the second surface 22) of the second glass substrate 2 as shown in FIG. 10. In this process step, the presser 903 is moved in the direction in which the first incision 901 extends (i.e., along the longitudinal axis of the first incision 901). As a result, parts, located on both sides of the first incision 91, of the first glass substrate 1 receive force in respective directions in which those parts are caused to separate from each other, thereby cutting off the first glass substrate 1 along the entire length of the latitudinal axis of the assembly 8. Also, the first pressing step is the step of cutting off the first glass substrate 1 with the first incision 91 from the second surface 12 toward the first surface 11 thereof.

The second cutting step includes a second incision forming step and a second pressing step. That is to say, the second glass substrate 2 is cut off from the surface thereof in these two steps, namely, the second incision forming step and the second pressing step.

The second incision forming step includes forming a second incision 92 on the surface of the second glass substrate 2. As shown in FIG. 8, the second incision 92 is formed by pressing the cutting edge of a cutter 904 against the surface (i.e., the second surface 22) of the second glass substrate 2. The second incision 92 is formed to such a depth as to scratch the surface (i.e., the second surface 22) of the second glass substrate 2 (refer to FIG. 9). Also, the second incision forming step is carried out along the entire length of the latitudinal axis of the assembly 8. Thus, the second incision 92 is formed linearly in plan view in the direction in which the seal member 3 extends (i.e., along the longitudinal axis of the seal member 3).

The second pressing step includes applying pressing force along the second incision 92 from the first glass substrate 1 toward the second glass substrate 2 to cut off the second glass substrate 2. Thus, the second pressing step is a step to be performed after the second incision forming step. The second pressing step may be performed by pressing a presser 905 such as a roller against the surface (i.e., the second surface 12) of the first glass substrate 1 as shown in FIG. 9. In this process step, the presser 905 is moved in the direction in which the second incision 902 extends (i.e., along the longitudinal axis of the second incision 92). As a result, parts, located on both sides of the second incision 92, of the second glass substrate 2 receive force in respective directions in which those parts are caused to separate from each other, thereby cutting off the second glass substrate 2 along the entire length of the latitudinal axis of the assembly 8. Also, the second pressing step is the step of cutting off the second glass substrate 2 with the second incision 92 from the second surface 22 toward the first surface 21 thereof.

The first incision 91 and the second incision 92 are formed to overlap with each other (i.e., aligned with each other) when viewed in plan (i.e., when viewed in the facing direction X). That is to say, the first incision 91 and the second incision 92 are formed on the virtual cutting plane 900. This allows the first and second glass substrates 1, 2 to be cut off along the same line when viewed in plan in the facing direction X in which the first and second glass substrates 1, 2 face each other.

The first cutting step and the second cutting step may be performed in any order without limitation. That is to say, the first cutting step may be followed by the second cutting step. Alternatively, the second cutting step may be followed by the first cutting step.

Furthermore, the first incision forming step, the first pressing step, the second incision forming step, and the second pressing step may be performed in an appropriate order. That is to say, the first incision forming step may be followed by the second incision forming step. Alternatively, the second incision forming step may be followed by the first incision forming step. Still alternatively, the first incision forming step and the second incision forming step may be performed in parallel with each other.

The first pressing step may be performed at any timing before or after the second incision forming step as long as the first pressing step is performed after the first incision forming step. In addition, the first pressing step may be performed at any timing before or after the second pressing step as long as the first pressing step is performed after the first incision forming step. Thus, the first pressing step may be performed after the second incision forming step and before the second pressing step.

The second pressing step may be performed at any timing before or after the first incision forming step as long as the second pressing step is performed after the second incision forming step. In addition, the second pressing step may be performed at any timing before or after the first pressing step as long as the second pressing step is performed after the second incision forming step. Thus, the second pressing step may be performed after the first incision forming step and before the first pressing step.

FIGS. 8-10 show a series of process steps included in the first cutting step and the second cutting step. First, as shown in FIG. 8, the first incision forming step and the second incision forming step are performed in parallel with each other. Next, as shown in FIG. 9, the second pressing step is performed. Thereafter, as shown in FIG. 10, the first pressing step is performed.

The seal member 3 is cut off in either the first pressing step or the second pressing step or in both the first pressing step and the second pressing step. If the seal member 3 is cut off in the first pressing step, the first glass substrate 1 is cut off from the second surface 12 toward the first surface 11 thereof and then the seal member 3 is cut off from the first surface 11 of the first glass substrate 1 toward the first surface 21 of the second glass substrate 2. If the seal member 3 is cut off in the second pressing step, the second glass substrate 2 is cut off from the second surface 22 toward the first surface 21 thereof and then the seal member 3 is cut off from the first surface 21 of the second glass substrate 2 toward the first surface 11 of the first glass substrate 1. If the seal member 3 is cut off in both the first pressing step and the second pressing step, then the seal member 3 is cut off halfway through its thickness in one step selected from the group consisting of the first pressing step and the second pressing step. Thereafter, the rest of the seal member 3 is cut off along the thickness thereof in the other step selected from the group consisting of the first pressing step and the second pressing step.

The seal member 3 has a width equal to or greater than 2 mm and equal to or less than 40 mm before being cut off. This reduces the chances of causing a decrease in the degree of hermetic seal of the glass panel unit 100 or a decrease in the mechanical strength thereof. Among other things, the partition member 32 of the seal member 3 is cut off across the latitudinal axis (i.e., the width) thereof, and therefore, each part of the partition member 32 divided preferably has a sufficiently broad width. For example, if the partition member 32 has a width equal to or greater than 2 mm before being cut off, then each part of the partition member 32 divided will have a width equal to or greater than 1 mm even when the partition member 32 to be divided is cut off approximately along a center line that passes through the middle of its width. Meanwhile, the seal member 3 preferably has a width equal to or less than 40 mm before being cut off, because this reduces the chances of the internal space 4 becoming too narrow. The seal member 3 more preferably has a width equal to or greater than 5 mm and equal to or less than 35 mm, and even more preferably has a width equal to or greater than 10 mm and equal to or less than 30 mm, before being cut off.

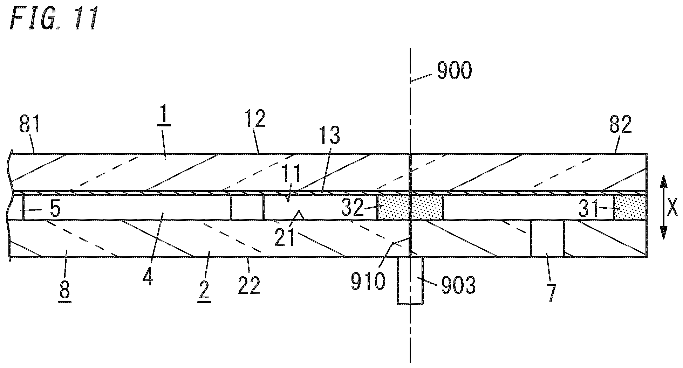

As shown in FIG. 11, the assembly 8 to be subjected to the cutting step S4 is cut off along a line on which the first glass substrate 1, the seal member 3, and the second glass substrate 2 are aligned with each other. The reference sign 910 denotes a cutting line along which the first glass substrate 1, the seal member 3, and the second glass substrate 2 are to be cut off. The cutting line 910 is located on the cutting plane 900. Thus, the first glass substrate 1, the seal member 3, and the second glass substrate 2 are cut off along the cutting plane 900. In this embodiment, the first glass substrate 1 and the second glass substrate 2 are cut off from their surface in both the first cutting step and the second cutting step. This makes it easier, even if the first glass substrate 1 or the second glass substrate 2 is relatively thick, to cut off the first glass substrate 1 and the second glass substrate 2 along a line aligned with the seal member 3. Thus, the cutting line 910 is a linear axis defined parallel to the facing direction X. As used herein, the "relatively thick" first glass substrate 1 or second glass substrate 2 refers to a glass substrate with a thickness equal to or greater than 2.7 mm. That is to say, according to this embodiment, even if at least one of the first glass substrate 1 or the second glass substrate 2 has a thickness equal to or greater than 2.7 mm, the cutting line 910 may also be defined as a linear axis on the cutting plane 900 and the chances of causing a cutting error are slim. Naturally, this embodiment may also reduce the chances of causing a cutting error even if at least one of the first glass substrate 1 or the second glass substrate 2 has a relatively small thickness (e.g., less than 2.7 mm).

The seal member 3 is a member formed by melting a glass frit once. Thus, in the assembly 8, the first glass substrate 1 and the second glass substrate 2 have been tightly integrated together via the seal member 3. Then, the cutting step S4 causes a crack along the thickness of the first glass substrate 1 or the second glass substrate 2, thus cutting off the first glass substrate 1, the partition member 32, and the second glass substrate 2 smoothly as if the first glass substrate 1, the partition member 32, and the second glass substrate 2 formed a single glass pane. That is to say, the assembly 8 may be cut off smoothly as if the assembly 8 were a single glass pane.

One part 81 divided from the assembly 8 is formed as the glass panel unit (thermally insulated glass panel unit) 100. The other part 82 divided is an extra part. Along one side 811 of the part 81 for use as the glass panel unit 100, respective cross sections of the first glass substrate 1, the seal member 3 (i.e., the partition member 32), and the second glass substrate 2 are flush and continuous with each other. This ensures sufficient mechanical strength and handleability even before the respective cross sections along the side 811 are subjected to further machining. Optionally, the respective cross sections along the side 811 may be subjected to any type of further machining as needed.

### (3) Variations

The first embodiment described above is only one of various embodiments of the present disclosure and should not be construed as limiting. Rather, the first embodiment may be readily modified in various manners depending on a design choice or any other factor without departing from the scope of the present disclosure.

In the first embodiment, the processing step S3 includes reducing the pressure in the internal space 4 until a vacuum is created there. Alternatively, the entire internal space 4 may be filled with a gas through the evacuation port 7 and the air passages 43 and then a part (i.e., the partition member 32) of the seal member 3 may be deformed by heating to hermetically seal the first space 41. In this case, the gas may be a gas with low thermal conductivity such as dried air or argon gas. An assembly 8 having the first space 41 filled with the gas may be obtained by going through such a processing step S3. Then, the one part 81 divided from the assembly 8 is used as a glass panel unit (thermally insulated glass panel unit) in which the gap between the first glass substrate 1 and the second glass substrate 2 is filled with the gas.

In the first embodiment described above, a roller is used as each of the pressers 903, 905. However, this is only an example and should not be construed as limiting. Alternatively, any other suitable tool may also be used as long as the tool may be used to press the second surface 12 of the first glass substrate 1 and the second surface 22 of the second glass substrate 2.

### (Second embodiment)

A method for manufacturing a glass panel unit 100 according to a second embodiment is different from the first embodiment in the configurations of the seal member 3 and the assembly 8. In the following description, any constituent element of this second embodiment, having the same function as a counterpart of the first embodiment described above, will be designated by the same reference numeral as that counterpart's, and description thereof will be omitted as appropriate herein. Optionally, the configuration to be described below for the second embodiment may be adopted as appropriate in combination with the configuration already described for the first embodiment (including its variations).

In a method for manufacturing a glass panel unit 100 according to the second embodiment, the assembly 8 is formed to obtain three glass panel units 100 out of a single assembly 8. In the method for manufacturing a glass panel unit 100 according to this embodiment, the process for obtaining three glass panel units 100 includes the arrangement step S1, the bonding step S2, the processing step S3, and the cutting step S4.

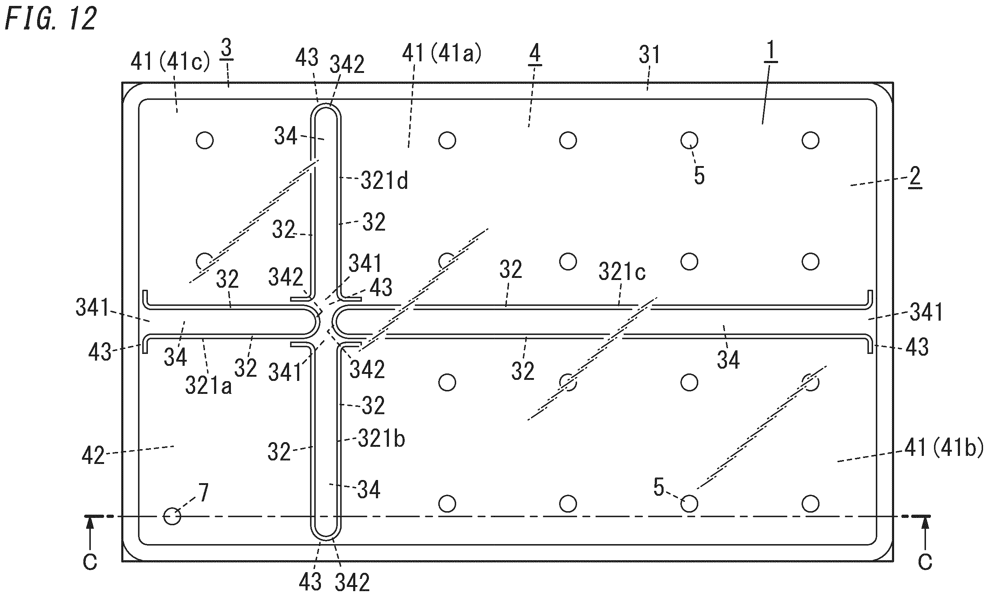

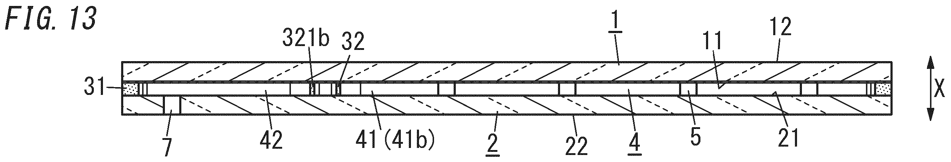

The arrangement step S1 includes arranging the first glass substrate 1 and the second glass substrate 2 to make the first glass substrate 1 and the second glass substrate 2 face each other with the seal member 3 (consisting of the frame member 31 and partition members 32) interposed between themselves. The bonding step S2 includes bonding the first glass substrate 1 and the second glass substrate 2 together via the seal member 3 (refer to FIGS. 12 and 13).

The internal space 4 surrounded with the frame member 31 between the first glass substrate 1 and the second glass substrate 2 is partitioned by four region defining members 321a, 321b, 321c, 321d into three first spaces 41 and one second space 42 (refer to FIGS. 12 and 13). In the following description, the three first spaces 41 will be hereinafter designated by the reference signs 41a, 41b, and 41c, respectively.

In this embodiment, the seal member 3 includes a plurality of facing portions which face each other with a gap 34 left between themselves. In this embodiment, the plurality of facing portions are configured as a plurality of partition members 32. The plurality of facing portions (partition members 32) face each other with the gap 34 left between themselves in a direction perpendicular to the facing direction X in which the first glass substrate 1 and the second glass substrate 2 bonded face each other. In this embodiment, two partition members 32 face each other with the gap 34 left between themselves. Each of the region defining members 321a, 321b, 321c, 321d is formed by arranging a pair of partition members 32 such that the partition members 32 face each other with the gap 34 left between themselves. The region defining member 321a separates the first space 41c and the second space 42 from each other. The region defining member 321b separates the first space 41b and the second space 42 from each other. The region defining member 321c separates the first space 41a and the first space 41b from each other. The region defining member 321d separates the first space 41a and the first space 41c from each other. In this manner, the plurality of partition members 32 partitions the internal space 4 surrounded with the first glass substrate 1, the second glass substrate 2, and the frame member 31 into the first spaces 41 and the second space 42.

The region defining members 321a, 321c are formed in an elongate shape parallel to the longitudinal axis of the first and second glass substrates 1, 2 when viewed in plan. At one longitudinal end, facing the frame member 31, of the region defining members 321a, 321c, the gap 34 is opened by an opening 341. On the other hand, at the other longitudinal end, opposite from the end facing the frame member 31, of the region defining members 321a, 321c, the gap 34 is closed by a closing portion 342. The respective closing portions 342 of the region defining members 321a, 321c face each other in a direction perpendicular to the facing direction X.

The region defining members 321b, 321d are formed in an elongate shape parallel to the latitudinal axis of the first and second glass substrates 1, 2 when viewed in plan. At one longitudinal end, facing the frame member 31, of the region defining members 321b, 321d, the gap 34 is closed by the closing portion 342. On the other hand, at the other longitudinal end, opposite from the end facing the frame member 31, of the region defining members 321b, 321d, the gap 34 is opened by the opening 341. The respective openings 341 of the region defining members 321b, 321d face each other in a direction perpendicular to the facing direction X. In the closing portion 342, respective end portions of the pair of partition members 32 are bonded together. On the other hand, respective end portions, adjacent to the opening 341, of the pair of partition members 32 are bent to separate from each other.

Air passages 43 are left between the frame member 31 and respective end portions, facing the frame member 31, of the region defining members 321a-321d. Air passages 43 are also left between the other end portions, opposite from the end portions facing the frame member 31, of the region defining members 321a- 321d. These air passages 43 allow the first spaces 41a, 41b, 41c and the second space 42 to communicate with each other such that the air may pass between these spaces 41a, 41b, 41c, 42.

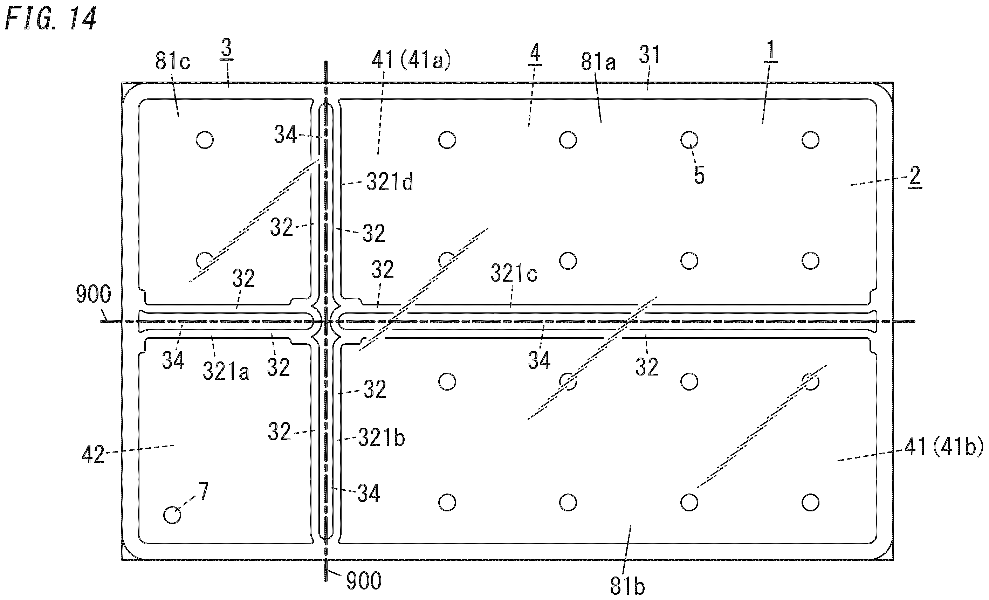

The evacuation step of the processing step S3 includes exhausting the air from the internal space 4 through the evacuation port 7 communicating with the second space 42, thereby turning the entire internal space 4 into a vacuum space. Next, the hermetically sealing step of the processing step S3 includes deforming the frame member 31 and the partition members 32 of the region defining members 321a-321d by heating, thereby closing the air passages 43 to prevent the air from passing therethrough. Meanwhile, the gap 34 is still left and not closed between each pair of partition members 32 facing each other. An assembly 8 having the first spaces 41a-41c that have turned into vacuum spaces is obtained as shown in FIG. 14 by going through the processing step S3. This assembly 8 includes the first and second glass substrates 1, 2 facing each other, the frame member 31, the plurality of partition members 32, and the evacuation port 7.

The cutting step S4 includes cutting off the assembly 8 along the virtual cutting planes 900 shown in FIG. 14. This cutting physically separates the assembly 8 into a part 81a having the hermetically sealed first space 41a, a part 81b having the hermetically sealed first space 41b, a part 81c having the hermetically sealed first space 41c, and a part 82 having the second space 42. In this assembly 8, the part 81a having the first space 41a as a vacuum space, the part 81b having the first space 41b as a vacuum space, and the part 81c having the first space 41c as a vacuum space are all used as glass panel units (thermally insulated glass panel units) 100. On the other hand, the part 82 having the second space 42 and the evacuation port 7 is an extra part.

In this embodiment, the cutting step S4 includes cutting off the first glass substrate 1 and the second glass substrate 2 along respective lines aligned with the gaps 34 when viewed in the facing direction in which the first and second glass substrates 1, 2 bonded face each other.

In this embodiment, the cutting step S4 also includes cutting off the first glass substrate 1 and the second glass substrate 2 along lines in which the first and second glass substrates 1, 2 are aligned with each other (i.e., along the same lines) when viewed in plan. The lines on which the first and second glass substrates 1, 2 are aligned with each other in plan view are located on the virtual cutting planes 900 and aligned with the respective gaps 34. In this embodiment, the first and second glass substrates 1, 2 are cut off in two perpendicular directions, namely, along the longitudinal axis and latitudinal axis of the assembly 8. In addition, the cutting step S4 also includes separating each pair of partition members 32 (seal member 3) facing each other along the gap 34. Each pair of partition members 32 facing each other is separated such that part of each partition member 32 separated remains along the side 811 of respective cross sections of the first and second glass substrates 1, 2 that have been cut off. Thus, respective parts of the partition members 32 separated remain at least along the sides 811 included in the parts 81a-81c having the first spaces 41a-41c, respectively. This keeps the first spaces 41a-41c hermetically sealed.

In this embodiment, as well as in the first embodiment described above, the cutting step S4 also includes a first cutting step and a second cutting step. Specifically, the first cutting step includes cutting off the first glass substrate 1 from one surface of the first glass substrate 1. The second cutting step includes cutting off the second glass substrate 2 from one surface of the second glass substrate 2.

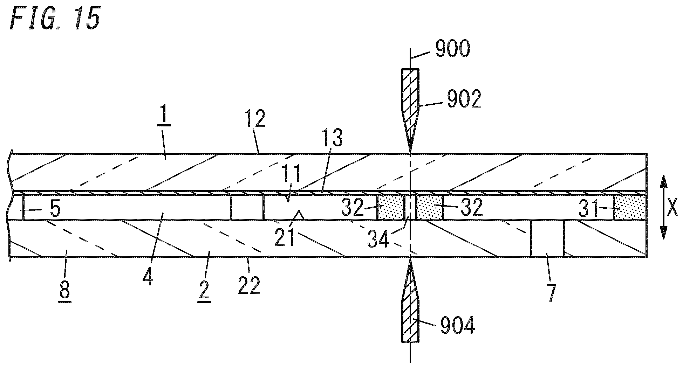

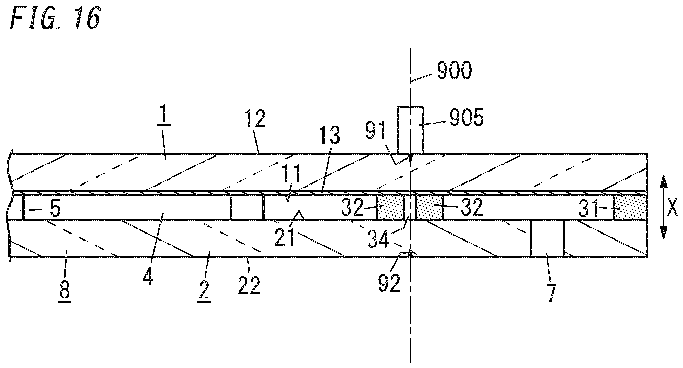

The first cutting step includes a first incision forming step and a first pressing step. The first incision forming step includes forming a first incision 91 on the first glass substrate 1 from a surface of the first glass substrate 1. As shown in FIG. 15, the first incision 91 is formed by pressing the cutting edge of the cutter 902 against the surface (i.e., the second surface 12) of the first glass substrate 1. The first incision 91 is formed to such a depth as to scratch the surface (i.e., the second surface 12) of the first glass substrate 1 (refer to FIG. 16). Also, the first incision forming step is carried out along the entire length of the latitudinal axis of the assembly 8. Thus, the first incision 91 is formed linearly in plan view in the direction in which the gap 34 extends (i.e., along the longitudinal axis of the gap 34).

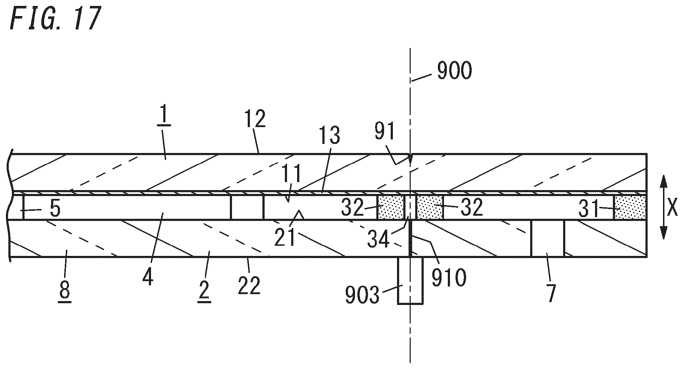

The first pressing step includes applying pressing force along the first incision 91 from the second glass substrate 2 toward the first glass substrate 1 to cut off the first glass substrate 1. Thus, the first pressing step is a step to be performed after the first incision forming step. The first pressing step may be performed by pressing a presser 903 such as a roller against the surface (i.e., the second surface 22) of the second glass substrate 2 as shown in FIG. 17. In this process step, the presser 903 is moved in the direction in which the first incision 901 extends (i.e., along the longitudinal axis of the first incision 901). As a result, parts, located on both sides of the first incision 91, of the first glass substrate 1 receive force in respective directions in which those parts are caused to separate from each other, thereby cutting off the first glass substrate 1 along the entire length of the latitudinal axis of the assembly 8. Also, the first pressing step is the step of cutting off the first glass substrate 1 with the first incision 91 from the second surface 12 toward the first surface 11 thereof.

The second cutting step includes a second incision forming step and a second pressing step. The second incision forming step includes forming a second incision 92 on the second glass substrate 2 from a surface of the second glass substrate 2. As shown in FIG. 15, the second incision 92 is formed by pressing the cutting edge of a cutter 904 against the surface (i.e., the second surface 22) of the second glass substrate 2. The second incision 92 is formed to such a depth as to scratch the surface (i.e., the second surface 22) of the second glass substrate 2 (refer to FIG. 16). Also, the second incision forming step is carried out along the entire length of the latitudinal axis of the assembly 8. Thus, the second incision 92 is formed linearly in plan view in the direction in which the gap 34 extends (i.e., along the longitudinal axis of the gap 34).

The second pressing step includes applying pressing force along the second incision 92 from the first glass substrate 1 toward the second glass substrate 2 to cut off the second glass substrate 2. Thus, the second pressing step is a step to be performed after the second incision forming step. The second pressing step may be performed by pressing a presser 905 such as a roller against the surface (i.e., the second surface 12) of the first glass substrate 1 as shown in FIG. 16. In this process step, the presser 905 is moved in the direction in which the second incision 902 extends (i.e., along the longitudinal axis of the second incision 92). As a result, parts, located on both sides of the second incision 92, of the second glass substrate 2 receive force in respective directions in which those parts are caused to separate from each other, thereby cutting off the second glass substrate 2 along the entire length of the latitudinal axis of the assembly 8. Also, the second pressing step is the step of cutting off the second glass substrate 2 with the second incision 92 from the second surface 22 toward the first surface 21 thereof.

The first incision 91 and the second incision 92 are formed to overlap with each other (i.e., aligned with each other) when viewed in plan (i.e., when viewed in the facing direction X). That is to say, the first incision 91 and the second incision 92 are formed on one of the virtual cutting planes 900 to be aligned with a corresponding one of the gaps 34. This allows the first and second glass substrates 1, 2 to be cut off along the same line when viewed in the facing direction X in which the first and second glass substrates 1, 2 face each other.

As in the first embodiment described above, the first cutting step and the second cutting step may be performed in any order without limitation. Furthermore, as in the first embodiment described above, the first incision forming step, the first pressing step, the second incision forming step, and the second pressing step may be performed in an appropriate order.

FIGS. 15-17 show a series of process steps of the first cutting step and the second cutting step. First, as shown in FIG. 15, the first incision forming step and the second incision forming step are performed in parallel. Next, as shown in FIG. 16, the second pressing step is performed. Then, as shown in FIG. 17, the first pressing step is performed.

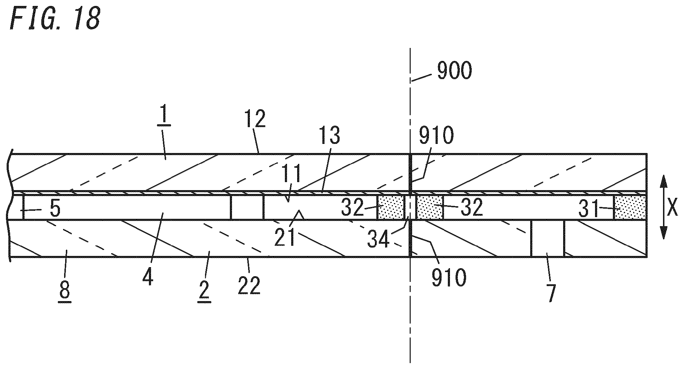

As shown in FIG. 18, the assembly 8 to be subjected to the cutting step S4 is cut off along a line on which the first glass substrate 1, the gap 34, and the second glass substrate 2 are aligned with each other when viewed in plan. The reference sign 910 denotes a cutting line along which the first glass substrate 1 and the second glass substrate 2 are to be cut off. The cutting line 910 is located on the cutting plane 900. Thus, the first glass substrate 1 and the second glass substrate 2 are cut off along the cutting plane 900. In this embodiment, the first glass substrate 1 and the second glass substrate 2 are cut off from their surface in both the first cutting step and the second cutting step. This makes it easier, even if the first glass substrate 1 or the second glass substrate 2 is relatively thick, to cut off the first glass substrate 1 and the second glass substrate 2 along a line aligned with the seal member 3. Thus, the cutting line 910 is defined as a linear axis parallel to the facing direction X.

In addition, according to this embodiment, the first glass substrate 1 and the second glass substrate 2 are cut off along lines, each of which is aligned with the gap 34 between a corresponding pair of partition members 32 facing each other. This reduces the chances of applying significant force to the respective partition members 32 in the cutting step S4. Consequently, a cutting error is less likely to occur in the second embodiment than in the first embodiment. In this embodiment, only a part of the seal member 3 is cut off in a region where each partition member 32 is bonded to the frame member 31.

In this embodiment, each partition member 32 has a width equal to or greater than 1 mm and equal to or less than 20 mm. As used herein, the width of the partition member 32 refers to a dimension as measured in a direction in which each pair of partition members 32 face each other. This reduces the chances of causing a decline in the degree of hermetic seal of the glass panel unit 100 or a decrease in the mechanical strength thereof. Setting the width of each partition member 32 at a value equal to or greater than 1 mm ensures that the partition member 32 of the glass panel unit 100 has a width equal to or greater than 1 mm. Also, the width of each partition member 32 is preferably equal to or less than 20 mm because this reduces the chances of making the internal space 4 too narrow. Each partition member 32 more preferably has a width equal to or greater than 2.5 mm and equal to or less than 15 mm, and even more preferably has a which equal to or greater than 3 mm and equal to or less than 10 mm.

The width of the gap 34 (i.e., a dimension measured between the pair of partition members 32 facing each other) is not limited to any particular value but is preferably equal to or greater than 0.1 mm and equal to or less than 20 mm. The width of the gap 34 preferably falls within this range to set the first incision 91 and the second incision 92 in place easily and smoothly.

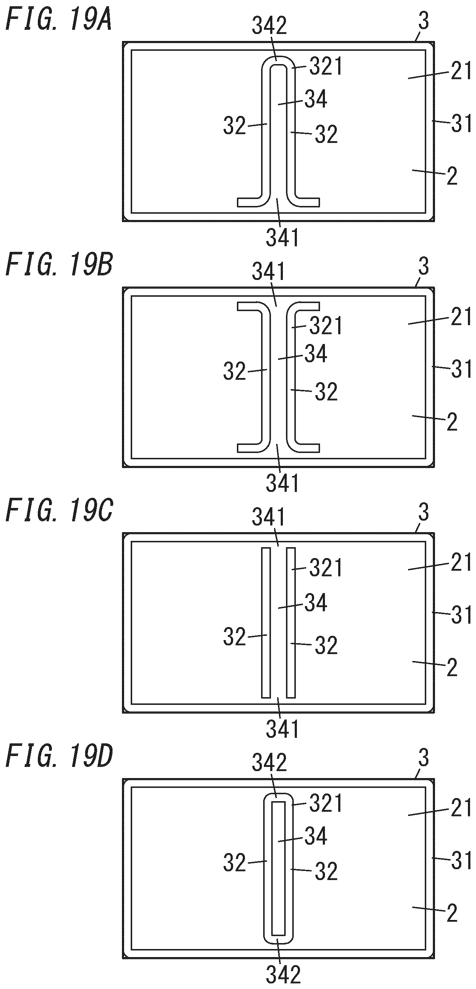

In this embodiment, the planar shapes of the region defining members 321a- 321d are not limited to any particular ones. For example, in the region defining member 321 shown in FIG. 19A, one longitudinal end of the gap 34 is closed by a closing portion 342, the other longitudinal end of the gap 34 is opened by an opening 341, and the end portion, adjacent to the opening 341, of each partition member 32 is bent. In the region defining member 321 shown in FIG. 19B, both longitudinal ends of the gap 34 are each opened by an opening 341 and both end portions of each partition member 32 are bent. In the region defining member 321 shown in FIG. 19C, both longitudinal ends of the gap 34 are each opened by an opening 341 and both end portions of each partition member 32 are not bent but straight. In the region defining member 321 shown in FIG. 19D, each longitudinal end of the gap 34 is closed by a closing portion 342. In the region defining member 321 shown in FIG. 19D, the gap 34 is closed, and therefore, the air is not exhausted from the gap 34 in the processing step S3. This region defining member 321 is not preferred because the first and second glass substrates 1, 2 would be pressed by the internal pressure in the gap 34 to make it difficult to let the seal member 3 collapse.

In the second embodiment described above, the assembly 8 is formed to obtain three glass panel units 100. Alternatively, the assembly 8 may also be formed to obtain four or more glass panel units (i.e., to cut out multiple (four or more) glass panel units out of a single assembly 8).

### (Recapitulation)

As can be seen from the foregoing description, a method for manufacturing a glass panel unit (100) according to a first aspect includes an arrangement step (S1), a bonding step (S2), and a cutting step (S4). The arrangement step (S1) includes arranging a first glass substrate (1) and a second glass substrate (2) to make the first glass substrate (1) and the second glass substrate (2) face each other with a seal member (3) interposed between the first glass substrate (1) and the second glass substrate (2). The bonding step (S2) includes bonding the first glass substrate (1) and the second glass substrate (2) via the seal member (3). The cutting step (S4) includes cutting off the first glass substrate (1) and the second glass substrate (2) along an identical line as viewed in a direction (X) in which the first glass substrate (1) and the second glass substrate (2) bonded together face each other and along the seal member (3). The cutting step (S4) is the step of forming multiple sets of the first and second glass substrates (1, 2) divided by cutting off the first and second glass substrates (1, 2) along a plane where the seal member (3) remains along respective sides of cross sections of the first and second glass substrates (1, 2) divided. The cutting step (S4) includes a first cutting step and a second cutting step. The first cutting step includes cutting off the first glass substrate (1) from a surface of the first glass substrate (1). The second cutting step includes cutting off the second glass substrate (2) from a surface of the second glass substrate (2).

According to this aspect, both the first glass substrate (1) and the second glass substrate (2) are cut off from their surface in both the first cutting step and the second cutting step. This makes it easier, even if either the first glass substrate (1) or the second glass substrate (2) is relatively thick, to cut off the first glass substrate (1) and the second glass substrate (2) along a line aligned with the seal member (3).

In a method for manufacturing a glass panel unit (100) according to a second aspect, which may be implemented in conjunction with the first aspect, the cutting step (S4) includes cutting off the first glass substrate (1) and the second glass substrate (2) along a virtual cutting plane (900) that passes through the first glass substrate (1), the second glass substrate (2), and the seal member (3).

This aspect allows the first glass substrate (1) and the second glass substrate (2) bonded together via the seal member (3) to be cut off smoothly at a time along a virtual cutting plane (900) passing through the seal member (3) as if a single glass pane were cut off.

**In a** method for manufacturing a glass panel unit (100) according to a third aspect, which may be implemented in conjunction with the second aspect, the seal member (3) has, before being cut off, a width equal to or greater than 2 mm and equal to or less than 40 mm.

This aspect makes it easier to keep the glass panel unit (100) hermetically sealed with reliability in a part of the seal member (3) that has been cut off.

**In a** method for manufacturing a glass panel unit (100) according to a fourth aspect, which may be implemented in conjunction with any one of the first to third aspects, the seal member (3) includes a plurality of facing portions facing each other with a gap (34) left between the plurality of facing portions. The cutting step (S4) includes cutting off the first glass substrate (1) and the second glass substrate (2) along a line aligned with the gap (34) when viewed in the direction (X) in which the first and second glass substrates (1, 2) bonded together face each other.

According to this aspect, the seal member (3) is divided into a plurality of facing portions along a line aligned with the gap (34), thus reducing the chances of force being applied to the seal member (3) in the cutting step (S4). This makes it easier to cut off the first glass substrate (1) and the second glass substrate (2) along the line aligned with the gap (34).

In a method for manufacturing a glass panel unit (100) according to a fifth aspect, which may be implemented in conjunction with the fourth aspect, the plurality of facing portions face each other with the gap (34) left between the plurality of facing portions themselves in a direction perpendicular to the direction (X) in which the first and second glass substrates (1, 2) bonded together face each other.

According to this aspect, the seal member (3) is divided into a plurality of facing portions along a line aligned with the gap (34), thus reducing the chances of force being applied to the seal member (3) in the cutting step (S4). This makes it easier to cut off the first glass substrate (1) and the second glass substrate (2) along the line aligned with the gap (34).

In a method for manufacturing a glass panel unit (100) according to a sixth aspect, which may be implemented in conjunction with the fourth or fifth aspect, each of the plurality of facing portions has a width equal to or greater than 1 mm and equal to or less than 20 mm.

This aspect makes it easier to keep the glass panel unit (100) hermetically sealed at the facing portions.

In a method for manufacturing a glass panel unit (100) according to a seventh aspect, which may be implemented in conjunction with any one of the first to sixth aspects, the first cutting step includes a first incision forming step and a first pressing step. The first incision forming step includes forming a first incision (91) on the first glass substrate (1) from a surface of the first glass substrate (1). The first pressing step includes applying pressing force along the first incision (91) from the second glass substrate (2) toward the first glass substrate (1) to cut off the first glass substrate (1). The second cutting step includes a second incision forming step and a second pressing step. The second incision forming step includes forming a second incision (92) on the second glass substrate (2) from a surface of the second glass substrate (2). The second pressing step includes applying pressing force along the second incision (92) from the second glass substrate (2) toward the first glass substrate (1) to cut off the second glass substrate (2).

According to this aspect, both the first glass substrate (1) and the second glass substrate (2) are cut off from their surface in the first incision forming step, the first pressing step, the second incision forming step, and the second pressing step. This makes it easier, even if either the first glass substrate (1) or the second glass substrate (2) is relatively thick, to cut off the first glass substrate (1) and the second glass substrate (2) along the first incision (91) and the second incision (92).

In a method for manufacturing a glass panel unit (100) according to an eighth aspect, which may be implemented in conjunction with any one of the first to seventh aspects, the seal member (3) includes a frame member (31) formed in a frame shape. The bonding step (S2) includes creating an internal space (4) surrounded with the frame member (31) between the first and second glass substrates (1, 2) bonded together via the frame member (31).

According to this aspect, interposing the internal space (4) between the first glass substrate (1) and the second glass substrate (2) improves the thermal insulation properties of the glass panel unit (100). That is to say, this makes it easier to efficiently manufacture a glass panel unit (100) having desired dimensions and shape and excellent thermal insulation properties.

A method for manufacturing a glass panel unit (100) according to a ninth aspect, which may be implemented in conjunction with the eighth aspect, further includes a processing step (S3) including either exhausting air from the internal space (4) or supplying a gas into the internal space (4).

According to this aspect, interposing the internal space (4), which either has had its pressure reduced or has been filled with a gas, between the first glass substrate (1) and the second glass substrate (2) further improves the thermal insulation properties of the glass panel unit (100). That is to say, this makes it easier to efficiently manufacture a glass panel unit (100) having desired dimensions and shape and excellent thermal insulation properties.

A glass panel unit (100) assembly (8) according to a tenth aspect includes a first glass substrate (1) and a second glass substrate (2) facing each other, a frame member (31), a plurality of partition members (32), and an evacuation port (7). The frame member (31) is formed in a frame shape between the first glass substrate (1) and the second glass substrate (2). The plurality of partition members (32) are arranged to partition an internal space (4), surrounded with the first glass substrate (1), the second glass substrate (2), and the frame member (31), into a first space (41) and a second space (42). The evacuation port (7) is provided to allow the second space (42) to communicate with an external space. The plurality of partition members (32) face each other with a gap (34) left between the plurality of partition members (32).

This aspect makes it easier, even if either the first glass substrate (1) or the second glass substrate (2) is relatively thick, to cut off the first glass substrate (1) and the second glass substrate (2) along a line aligned with the gap (34).

In a glass panel unit (100) assembly (8) according to an eleventh aspect, which may be implemented in conjunction with the tenth aspect, the plurality of partition members (32) face each other with the gap (34) left between the plurality of partition members (32) themselves in a direction perpendicular to a direction (X) in which the first and second glass substrates (1, 2) face each other.

This aspect makes it easier, even if either the first glass substrate (1) or the second glass substrate (2) is relatively thick, to cut off the first glass substrate (1) and the second glass substrate (2) along a line aligned with the gap (34).

### Examples

### (First example)

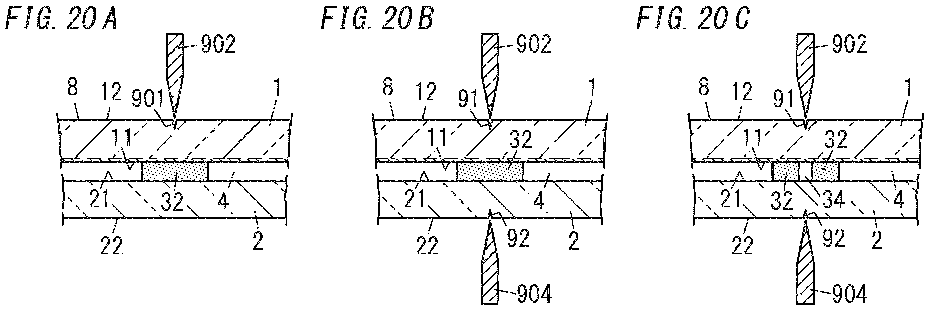

The assembly 8 was cut off by performing the cutting step according to the first embodiment (refer to FIG. 20B). The first glass substrate 1 had a thickness of 1.7 mm. The thickness of the second glass substrate 2 was changed from one of the values shown in the following Table 1 to another. The partition member 32 (seal member 3) had a width of 10 mm and a thickness of 0.1 mm. The material for the partition member 32 was changed from one of the materials shown in the following Table 1 to another. In Table 1, "Bi-based" stands for a bismuth-based glass frit and "V-based" stands for a vanadium-based glass frit.

As the cutting step, the first incision forming step and the second incision forming step were performed in parallel. After that, the second pressing step was performed and then the first pressing step was performed.

### (Second example)

The assembly 8 was cut off by performing the cutting step according to the second embodiment (refer to FIG. 20C). The first glass substrate 1 had a thickness of 1.7 mm. The thickness of the second glass substrate 2 was changed from one of the values shown in the following Table 1 to another. The partition member 32 (seal member 3) had a width of 5 mm and a thickness of 0.1 mm. The gaps 34 each had a width of 1 mm. The material for the partition members 32 was changed from one of the materials shown in the following Table 1 to another.

As the cutting step, the first incision forming step and the second incision forming step were performed in parallel. After that, the second pressing step was performed and then the first pressing step was performed.

### (Comparative example)

A comparative example was the same as the first example except that the assembly 8 was cut off (refer to FIG. 20A) by performing the cutting step of the known art.

The first and second examples and the comparative example were evaluated under the following criteria in how smoothly the cutting step could be performed and in the cross section obtained by the cutting step:
⊚ (corresponding to "Grade S," or "excellent"): if the assembly 8 could be cut off smoothly with no cutting errors caused and with a neat and trim cross section formed;
○ (corresponding to "Grade A," or "good") if the assembly 8 could be cut off smoothly with no cutting errors caused and with a cross section passable in practice formed;
△ (corresponding to "Grade B," or "fair") if the assembly 8 could be cut off moderately well in practice with no cutting errors caused and with a cross section passable in practice formed; or
× (corresponding to "Grade C," or "not good") if cutting errors occurred frequently and leakage from the internal space was observed rather often.

**[Table 1]**

| Thickness (mm)of second glass substrate | Material for seal member | Comparative example | First example | Second example |
|---|---|---|---|---|
| | (Material/softening point) | Cut from one side | Cut from both sides with no gaps left | Cut from both sides with gaps left |
| 1.7 | Bi-based/430°C | ○ | ⊚ | ⊚ |
| 2.7 | Bi-based/430°C | Δ | ○ | ⊚ |
| 3.7 | Bi-based/430°C | × | Δ | ⊚ |
| 4.7 | Bi-based/430°C | × | Δ | ⊚ |
| 5.7 | Bi-based/430°C | × | Δ | ⊚ |
| 1.7 | V-based/265°C | × | ○ | ⊚ |
| 2.7 | V-based/265°C | × | ○ | ⊚ |
| 3.7 | V-based/265°C | × | ○ | ⊚ |
| 4.7 | V-based/265°C | × | Δ | ⊚ |
| 5.7 | V-based/265°C | × | Δ | ⊚ |

As can be seen from Table 1, in the first and second examples, grades were better than in the comparative example if the second glass substrate 2 had a thickness equal to or greater than 1.7 mm. In addition, in the first and second examples, there was no problem in practice even if the second glass substrate 2 had a thickness equal to or greater than 3.7 mm. In particular, in the second example, grade was still excellent even if the second glass substrate 2 was as thick as 5.7 mm.

### Reference Signs List

- 1: First Glass Substrate
- 2: Second Glass Substrate
- 3: Seal Member
- 4: Internal Space
- 7: Evacuation Port
- 8: Assembly
- 31: Frame Member
- 32: Partition Member
- 34: Gap
- 41: First Space
- 42: Second Space
- 91: First Incision
- 92: Second Incision
- 100: Glass Panel Unit
- X: Facing Direction
- S1: Arrangement Step
- S2: Bonding Step
- S3: Processing Step
- S4: Cutting Step

## Claims

1. A method for manufacturing a glass panel unit, the method comprising:
an arrangement step including arranging a first glass substrate and a second glass substrate to make the first glass substrate and the second glass substrate face each other with a seal member interposed between the first glass substrate and the second glass substrate;
a bonding step including bonding the first glass substrate and the second glass substrate via the seal member; and
a cutting step including cutting off the first glass substrate and the second glass substrate along an identical line as viewed in a direction in which the first glass substrate and the second glass substrate bonded together face each other and along the seal member,
the cutting step being a step of forming multiple sets of the first and second glass substrates divided by cutting off the first and second glass substrates along a plane where the seal member remains along respective sides of cross sections of the first and second glass substrates, and
the cutting step including: a first cutting step including cutting off the first glass substrate from a surface of the first glass substrate; and a second cutting step including cutting off the second glass substrate from a surface of the second glass substrate.

2. The method of claim 1, wherein
the cutting step includes cutting off the first glass substrate and the second glass substrate along a virtual cutting plane that passes through the first glass substrate, the second glass substrate, and the seal member.

3. The method of claim 2, wherein
the seal member has, before being cut off, a width equal to or greater than 2 mm and equal to or less than 40 mm.

4. The method of claim 1, wherein
the seal member includes a plurality of facing portions facing each other with a gap left between the plurality of facing portions, and
the cutting step includes cutting off the first glass substrate and the second glass substrate along a line aligned with the gap as viewed in the direction in which the first and second glass substrates bonded together face each other.

5. The method of claim 4, wherein
the plurality of facing portions face each other with the gap left between the plurality of facing portions themselves in a direction perpendicular to the direction in which the first and second glass substrates bonded together face each other.

6. The method of claim 4 or 5, wherein
each of the plurality of facing portions has a width equal to or greater than 1 mm and equal to or less than 20 mm.

7. The method of any one of claims 1 to 5, wherein
the first cutting step includes:
a first incision forming step including forming a first incision on the first glass substrate from a surface of the first glass substrate; and
a first pressing step including applying pressing force along the first incision from the second glass substrate toward the first glass substrate to cut off the first glass substrate, and
the second cutting step includes:
a second incision forming step including forming a second incision on the second glass substrate from a surface of the second glass substrate; and
a second pressing step including applying pressing force along the second incision from the first glass substrate toward the second glass substrate to cut off the second glass substrate.

8. The method of any one of claims 1 to 5, wherein
the seal member includes a frame member formed in a frame shape, and
the bonding step includes creating an internal space surrounded with the frame member between the first and second glass substrates bonded together via the frame member.

9. The method of claim 8, further comprising a processing step including either exhausting air from the internal space or supplying a gas into the internal space.

10. A glass panel unit assembly comprising:
a first glass substrate and a second glass substrate facing each other;
a frame member formed in a frame shape between the first glass substrate and the second glass substrate;
a plurality of partition members arranged to partition an internal space, surrounded with the first glass substrate, the second glass substrate, and the frame member, into a first space and a second space; and
an evacuation port provided to allow the second space to communicate with an external space,
the plurality of partition members facing each other with a gap left between the plurality of partition members.

11. The glass panel unit assembly of claim 10, wherein
the plurality of partition members face each other with the gap left between the plurality of partition members themselves in a direction perpendicular to a direction in which the first and second glass substrates face each other.
